# EUROPEAN PATENT SPECIFICATION

(11) **EP 2 737 993 B1**
(45) Date of publication and mention of the grant of the patent: **28.02.2018**
(21) Application number: 11869824.0
(22) Date of filing: 26.07.2011
(51) Int. Cl.: B29C 45/84, B29C 45/76

(54) **INJECTION MOLDING MACHINE**
SPRITZGUSSMASCHINE
MACHINE DE MOULAGE PAR INJECTION

(43) Date of publication of application: 04.06.2014
(73) Proprietor: Toyo Machinery & Metal Co., Ltd., Futamicho Akashi-shi, Hyogo 674-0091 (JP)
(72) Inventor: TARUYA, Koji, Akashi-shi Hyogo 674-0091 (JP)
(74) Representative: Addiss, John William
(86) International application number: PCT/JP2011/066929
(87) International publication number: WO 2013/014747

(56) References cited:
- JP-A- 2005 288 895
- JP-A- 2006 334 820
- JP-B2- 4 490 835
- US-A1- 2005 151 288
- US-A1- 2005 218 545

## Description

### BACKGROUND OF THE INVENTION

### Field of the Invention

The present invention relates to an injection molding machine for molding a molded product by injecting molten resin from a heating cylinder to a cavity of a clamped mold. Specifically, the present invention relates to an injection molding machine capable of stopping the mold clamping operation speedily if a portion of the molded part remains within the mold due to mold release failure or the like.

### Description of the Related Art

Conventionally, in an injection molding machine for molding molded parts, a problem is known to occur where a portion of the molded part remains as foreign matter within the molds due to mold release failure or the like of the molded part, and sandwiched between the molds when the mold is clamped. For example, Patent Document 1 (Japanese Patent No. 4490835) filed by the present applicant discloses an injection molding machine having a foreign matter determination means for determining whether foreign matter exists between molds or not.

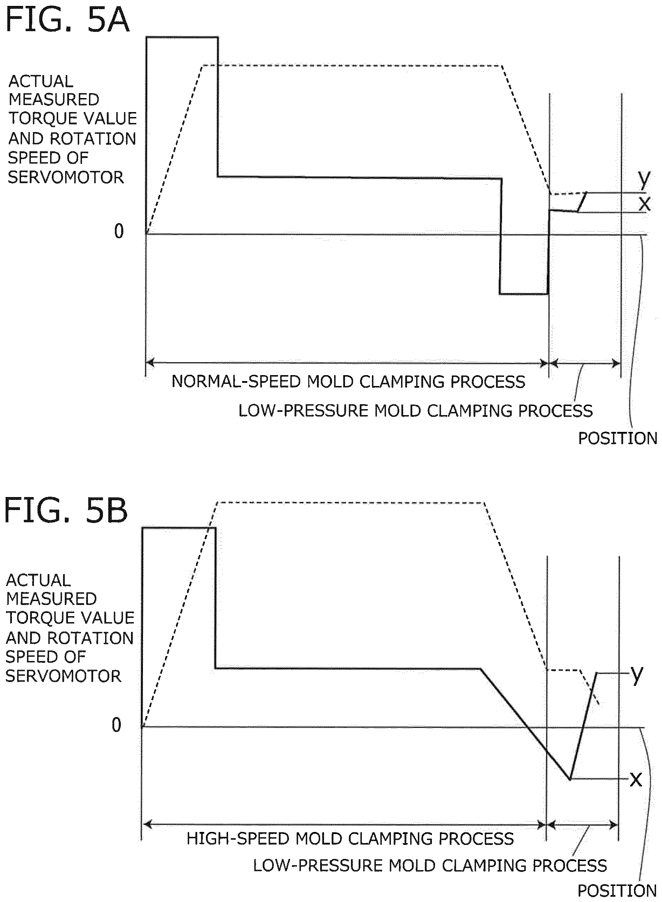

Fig. 5A illustrates waveforms in a normal, relatively low-speed mold clamping process of a conventional injection molding machine, and Fig. 5B illustrates waveforms in a high-speed mold clamping process of a conventional injection molding machine. The vertical axes of Figs. 5A and 5B represent an actual measured torque value of a servomotor operating a movable mold fixed to a movable die plate with respect to a fixed mold fixed to a fixed die plate, and a rotation speed of the servomotor. In the drawings, the solid line represents a waveform corresponding to the actual measured torque value, and the dotted line represents a waveform corresponding to the rotation speed. Further, the horizontal axes of Figs. 5A and 5B represent the position of movement of the movable mold as a position in the mold clamping process. Now, if the actual measured torque value detected via a torque value detection means not shown is positioned above zero, it means that torque has occurred to the mold clamping side, wherein the value represents the torque value in the mold clamping direction, whereas if the actual measured torque value is positioned below zero, it means that torque has occurred to the mold opening side, wherein the value represents the torque value in the mold opening direction, and if the actual measured torque value is positioned at zero, it means that the static balance of the acceleration-side torque and the deceleration-side torque of the servomotor is achieved. Figs. 5A and 5B show the prior art mold clamping process. In the mold clamping process of Fig. 5A, a normal-speed mold clamping process in which mold clamping is performed at a relatively low speed, a low-pressure mold clamping process performed at low pressure, and a high-pressure mold clamping process generating a high-pressure mold clamping force (not shown) are performed sequentially. In the mold clamping process of Fig. 5B, a high-speed mold clamping process in which mold clamping is performed at high speed, a low-pressure mold clamping process performed at low pressure, and a high-pressure mold clamping process for generating a high pressure mold clamping force (not shown) are performed sequentially. In such prior art low-pressure mold clamping process, the torque value in the mold opening-side is detected, and based on the change of torque value, whether foreign matter is sandwiched between molds is determined. In Fig. 5A, when the actual measured torque value during the low pressure mold clamping process is on the mold clamping side, if foreign matter is sandwiched between molds, the actual measured torque value is changed from x to y, and abnormality is detected when the actual measured torque value y falls out of range of a monitored torque value in advance as a normal value. On the other hand, in Fig. 5B, the actual measured torque value is at a mold opening side at the former half of the low pressure mold clamping process, and the value is at a mold clamping side at the latter half, and the actual measured torque value changes from x to y, wherein the actual measured torque value y exceeds the monitored torque value set in advance. The determination based on this value that foreign matter is sandwiched between molds is performed not at the former half of the low-pressure mold clamping process but at the latter half of the low-pressure mold clamping process where the actual measured torque value is placed on the mold clamping side. Accordingly, the abnormality detection takes up much time, the mold clamping operation of the mold cannot be stopped speedily, and the molded part as foreign matter will be crushed to a certain level, based on which the mold may be damaged.

US2005/0218545A1 and US2005/0151288A1 disclose a mold protection method for a mold clamping apparatus in which foreign matter is detected on the basis of a change in physical quantity of the mold. When load torque is the physical quantity used, a foreign object is detected when the magnitude of the load torque exceeds a preset threshold value.

The present invention provides an injection molding machine comprising:
a servomotor for opening and closing a mold; wherein the servomotor is driven to sequentially perform, as mold clamping processes, a high-speed mold clamping process, a low-pressure mold clamping process, and a high-pressure mold clamping process; wherein
the machine comprises an abnormality determination means that determines that foreign matter exists between molds, and further comprises a servomotor stopping means for stopping the servomotor when the abnormality determination means determines that foreign matter exists; wherein
the injection molding machine further comprises a torque value detection means for detecting an actual measured torque value of the servomotor; and
the abnormality determination means determines that foreign matter exists between molds when the actual measured torque value of the servomotor that occurs to a mold opening side during the low-pressure mold clamping process is negative and changes so as to become less negative such that it falls out of range of a given normal value set in advance.

Thus, the present invention determines based on the torque value occurring in the mold opening side that a portion of a molded part or the like exists as foreign matter between the molds. That is, the present invention enables an injection molding machine to be provided which is capable of detecting the existence of a foreign matter between molds during a low-pressure mold clamping process performed before a high-pressure mold clamping process, and when such abnormality occurs, stopping the mold clamping operation of the mold via a servomotor speedily at a stage prior to performing the high pressure mold clamping process.

According to the present invention, in a low pressure mold clamping process of the injection molding machine performed immediately after a high-speed mold clamping process and immediately prior to a high-pressure mold clamping process, when an actual measured torque value of a servomotor that occurs in the mold opening side during the low-pressure mold clamping process is negative and changes so as to become less negative such that it falls out of range of a given normal value set in advance, an abnormality determination means determines that foreign matter exists between the molds. Then, when it is determined that foreign matter exists between the molds and that there is abnormality, a servomotor stopping means stops the operation of the servomotor based on that determination. Thus, the servomotor can be stopped due to the existence of a foreign matter between molds during a low-pressure mold clamping process performed prior to having the high pressure mold clamping process executed, and the mold clamping operation of the molds can be stopped urgently. According to this operation, the present invention enables to prevent foreign matter from being crushed by high pressure and breaking during the high-pressure mold clamping process performed at the latter half of the mold clamping process, and furthermore, enables to prevent damage of the molds.

### BRIEF DESCRIPTION OF THE DRAWINGS

Fig. 1 is a front view showing an outline of a configuration of an injection molding machine;
Fig. 2 is a block diagram showing a configuration of a control system of the injection molding machine;
Fig. 3 is an explanatory view showing waveforms displayed on a display device when foreign matter exists between molds in a high-speed mold clamping process of Embodiment 1;
Fig. 4 is an explanatory view showing the waveforms displayed on the display device when foreign matter exists between molds in a normal, relatively low-speed mold clamping process according to Embodiment 2;
Fig. 5A shows waveforms displayed on the display device when foreign matter exists between molds in a normal, relatively low-speed mold clamping process in a prior art injection molding machine; and
Fig. 5B shows waveforms displayed on the display device when foreign matter exists between molds in a high-speed mold clamping process in a prior art injection molding machine.

### DETAILED DESCRIPTION OF THE PREFERRED EMBODIMENTS

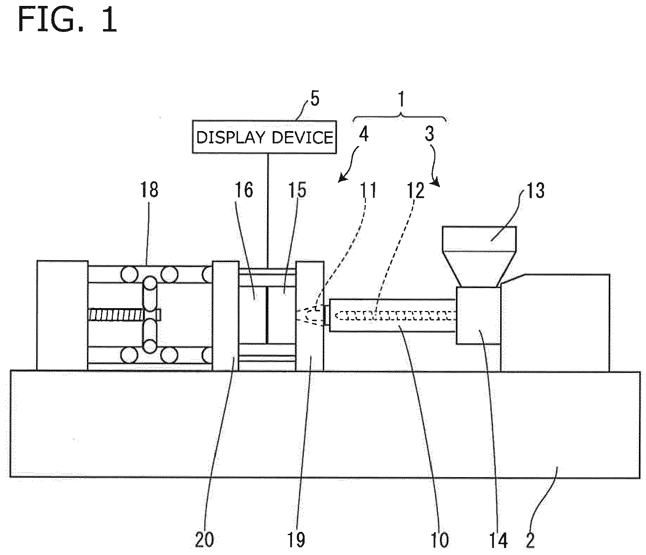

Now, the preferred embodiments of the present invention will be described with reference to Figs. 1 through 4. Of course, the present invention is easily applicable to components other than those illustrated in the present embodiment within the scope of the invention.

### Embodiment 1

As shown in Fig. 1, an injection molding machine 1 according to Embodiment 1 has a machine platform 2, and on the machine platform 2 is disposed an injection unit 3 and a mold clamping unit 4.

The injection unit 3 includes a cylinder-shaped heating cylinder 10, an injection nozzle 11 attached to a leading end of the heating cylinder 10, a screw 12 disposed inside the heating cylinder 10, a hopper 13 into which grain-like resin (pellets) as material are poured, and a hopper block 14 to which the hopper 13 is disposed. When the screw 12 disposed inside the heating cylinder 10 is rotated, the resin fed to the rear side of the heating cylinder 10 is discharged toward the leading end side of the heating cylinder 10 to which the injection nozzle 11 is disposed, and supplied to the interior of the heating cylinder 10. The molten resin heated within the heating cylinder 10 is metered by the screw 12 being rotated via a rotary drive means composed for example of a metering motor or the like not shown, and thereafter, a given amount of molten resin is injected to the cavity of the mold by moving the screw 12 forward via a forward-rearward drive means composed for example of an injection motor, a ball screw mechanism or the like not shown.

Further, the mold clamping unit 4 has a mold open-close mechanism for moving a movable mold 16 forward or rearward with respect to a fixed mold 15, and clamping or opening the mold. As the mold open-close mechanism according to the present embodiment, by bending a toggle link mechanism 18 using a drive force of a servomotor 17 as the drive source, the movable mold 16 fixed to a movable die plate 20 is repeatedly opened and closed with respect to the fixed mold 15 fixed to a fixed die plate 19.

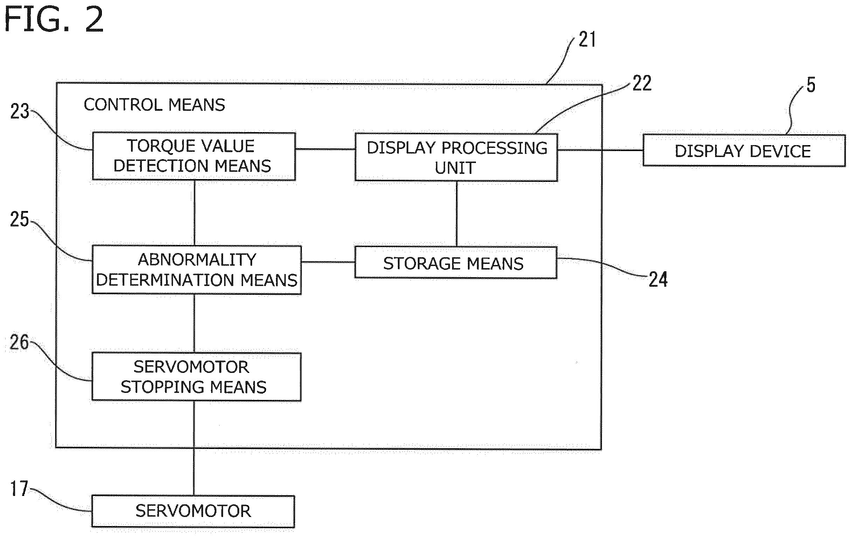

Further, as shown in Fig. 2 or the like, the injection molding machine 1 has a display device 5 displaying a rotation speed and an actual measured torque value of the servomotor 17 as waveform. A control means 21 disposed in the injection molding machine 1 includes a display processing unit 22, a torque value detection means 23, a storage means 24, an abnormality determination means 25, a servomotor stopping means 26, and so on. The display processing unit 22 displays various information, such as the aforementioned waveforms, on the display device 5. The torque value detection means 23 detects the actual measured torque value of the servomotor 17. The storage means 24 stores the actual measured torque value detected via the torque value detection means 23 or a normal value in a low-pressure mold clamping process described later. The abnormality determination means 25 determines that a foreign matter exists between molds when the actual measured torque value measured during the low-pressure mold clamping process falls out of range of the normal value of the low-pressure mold clamping process set in advance. The servomotor 17 is stopped when the servomotor stopping means 26 determines that foreign matter exists in the abnormality determination means 25. Further, the determination of foreign matter by the abnormality determination means 25 is performed based on the actual measured torque value of the servomotor 17 falling out of the normal value range that molded part is sandwiched between molds when a molded part remains on the surface forming the cavity of the fixed mold 15 or the movable mold 16 due to mold release failure or the like.

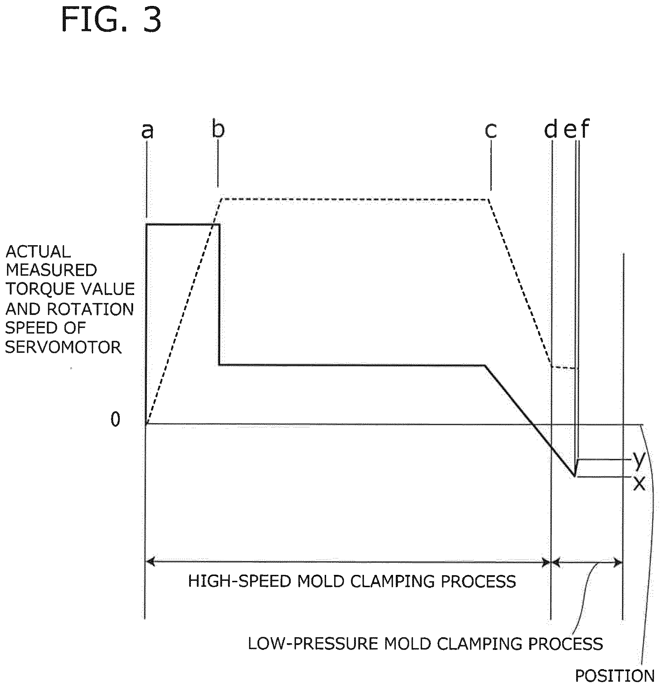

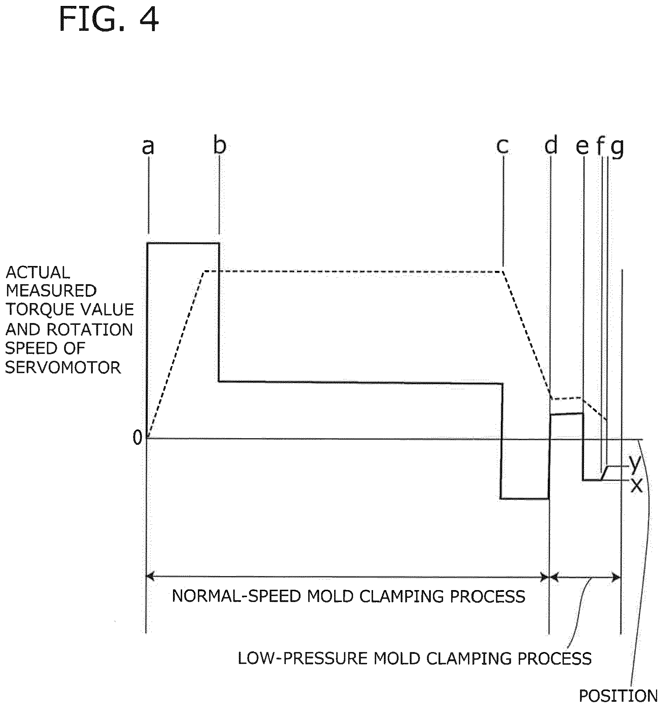

At this time, in the mold clamping process performed at high speed, the operation of the case where the molded part remains between the molds due to mold release failure will be described with reference to Fig. 3. In Fig. 3 and Fig. 4 described later, the vertical axis represents the actual measured torque value of the servomotor 17 and the rotation speed of the servomotor 17. A waveform corresponding to the actual measured torque value is shown by a solid line, and a waveform corresponding to the rotation speed is shown by a dotted line. Further, the horizontal axis shows a position of movement of the movable mold 16 in the mold clamping process as a position. If the actual measured torque value detected via the torque value detection means 23 is positioned above zero, it means that torque has occurred in the mold clamping side, and the value represents the torque value in the mold clamping direction. If the actual measured torque value is positioned below zero, it means that torque has occurred in the mold opening direction, and the value represents the torque value in the mold opening direction. If the actual measured torque value is positioned at zero, it means that the static balance of the torques toward the accelerating side and the decelerating side of the servomotor 17 is stable. In the mold clamping process of the injection molding machine 1 according to the present Embodiment 1, a high-speed mold clamping process, a low-pressure mold clamping process, and a high-pressure mold clamping process are performed sequentially. The present invention characterizes in that determination is performed based on the change of actual measured torque value of the servomotor 17 during the low pressure mold clamping process, so that the waveforms after it is determined that foreign matter exists are omitted from Fig. 3 and Fig. 4 described later.

As shown in Fig. 3, when the mold clamping process is started, in the high-speed mold clamping process, as shown in the drawing between a and b, drive control is performed so that the actual measured torque value of the servomotor 17 is maintained at a constant level, and when the rotation speed of the servomotor 17 reaches a predetermined speed at position b, as shown in the drawing between positions b and c, the rotation speed and the actual measured torque value of the servomotor 17 is maintained at a constant level in that state, and the actual measured torque value between positions b and c is transited constantly via an actual measured torque value lower than the value between a and b.

Next, in order to transit to the low-pressure mold clamping process, the operation of the servomotor 17 is turned off between positions c and d at the latter half of the high-speed mold clamping process, and deceleration is performed. Along with the deceleration, the actual measured torque value approximates zero, and between c and d, in contrast to the former half where the actual measured torque value is placed above zero and torque occurs to the mold clamping side, in the latter half, the actual measured torque value is positioned below zero, and torque occurs to the mold opening side. Thereafter, as shown in the area between positions d and e, the actual measured torque value after the low-pressure mold clamping process has been started is positioned on the mold opening side below zero and torque occurs to the mold opening side. In the mold clamping process of Fig. 3 in which the mold clamping process is performed at high speed, as shown in the drawing, the actual measured torque value gradually changes from the latter half of the high-speed mold clamping process to the former half of the low-pressure mold clamping process and the waveform is reduced, and in the area between d and e of Fig. 3, operation is controlled so that the rotation speed of the servomotor 17 is maintained at a substantially constant level.

Then, during the low-pressure mold clamping process, if foreign matter exists between the molds and the foreign matter is sandwiched between the molds, the actual measured torque value x of position e changes to the actual measured torque value y of position f, and the waveform that has been declining begins to rise. In other words, the actual measured torque value that has been increased at the mold opening side below zero to move away from zero will be reduced and approximates zero. In other words, the direction of the waveform of the actual measured torque value is switched to the opposite direction at position e and is changed from declining to increasing, so that the actual measured torque value is changed from the actual measured torque value x at position e to the actual measured torque value y at position f, and the actual measured torque value at the mold opening side reduces. When it is determined by the abnormality determination means 25 that the actual measured torque value y has changed to a value other than a monitor torque value which is a normal value stored in the storage means 24 as a normal value set in advance by the user, a servomotor stopping means 25 urgently stops the operation of the servomotor 17 based on the determination. The monitor torque value which is a normal value stored in the storage means 24 is a value within the range of plus or minus 20 % of x at position e.

### Embodiment 2

Next, a normal mold clamping process performed at low speed will be described with reference to Fig. 4 as Embodiment 2. The present description describes a normal mold clamping process performed at a lower speed than the mold clamping process performed at high speed described with reference to Fig. 3. The mold clamping process of Embodiment 2 differs from the mold clamping process of Embodiment 1, but adopts the injection molding machine 1 described in Embodiment 1, so that the description of the configuration is omitted, and the reference numbers used in Embodiment 1 are referred to in describing the present embodiment below.

In a normal, relatively low-speed mold clamping process according to Embodiment 2 where the mold clamping process is not performed at high speed, when the mold clamping process is started, in a normal-speed mold clamping process, as shown in the area between a and b, the servomotor 17 is driven so that the actual measured torque value thereof is substantially constant, and when the actual measured torque value of the servomotor 17 reaches a predetermined value at position b, the rotation speed and the actual measured torque value of the servomotor 17 is maintained at a constant level between subsequent positions b and c, and the actual measured torque value between positions b and c is transited at a constant level at an actual measured torque value lower than the value between positions a and b.

Thereafter, in order to transit to the low pressure mold clamping process, the operation of the servomotor 17 is turned off and deceleration is performed between positions c and d at the latter half of the normal-speed mold clamping process. During this deceleration, in contrast to the area between positions a and c where the actual measured torque value is placed above zero and torque occurs to the mold clamping side, in the area between positions c and d, the actual measured torque value is positioned below zero toward the mold opening side, and torque occurs to the mold opening side.

Thereafter, when the servomotor 17 is driven at position d which corresponds to the end time of the normal-speed mold clamping process and start time of the low-pressure mold clamping process, the actual measured torque value is transited to the mold clamping side above zero, and as shown in the area between positions d and e, the servomotor 17 is operated so that the rotation speed and the actual measured torque value of the servomotor 17 is maintained at a constant level. Next, when the operation of the servomotor 17 is turned off, as shown in the area between positions e and f, the deceleration of the servomotor 17 causes the actual measured torque value between positions e and f to transit toward the mold opening side below zero, and is maintained at a constant level. When foreign matter exists between the molds and the foreign matter is sandwiched by the molds, the actual measured torque value x having been maintaining a constant level between positions e and f will be changed from the actual measured torque value x at position f to the actual measured torque value y at position g since the actual measured torque value at the mold opening side is reduced. Then, when it is determined by the abnormality determination means 25 that the actual measured torque value y has changed to a value other than the monitor torque value set by the user as normal value stored in the storage means 24, the servomotor stopping means 26 urgently stops the driving of the servomotor 17 based on that determination. Further, the monitor torque value as normal value stored in the storage means 24 is a value within the range of plus or minus 20 % of x between positions e and f.

As described, the injection molding machine 1 of Embodiments 1 and 2 includes a servomotor 17 as a drive source for opening and closing a mold, and a torque value detection means 23 for detecting the actual measured torque value of the servomotor 17. The servomotor 17 is driven to perform, as mold clamping processes, a high-speed mold clamping process or a normal-speed mold clamping process, a low-pressure mold clamping process, and a high-pressure mold clamping process sequentially. This injection molding machine 1 includes an abnormality determination means 25 for determining that foreign matter exists between molds when the actual measured torque value of the servomotor 17 that occurs to the mold opening side during the low pressure mold clamping process falls out of range of the given normal value set in advance. This injection molding machine 1 is equipped with a servomotor stopping means 26 for stopping the servomotor 17 when the abnormality determination means 25 determines that foreign matter exists. In the low-pressure mold clamping process performed immediately after the high-speed mold clamping process or the normal-speed mold clamping process of the injection molding machine 1 and performed immediately prior to the high-pressure mold clamping process, if the actual measured torque value of the servomotor 17 that occurs in the mold opening side falls out of range of the given normal value set in advance, the abnormality determination means 25 determines that a foreign matter exists between the molds. If the abnormality determination means 25 determines that there is a foreign matter existing between the molds and that there is abnormality, the servomotor stopping means 26 stops the driving of the servomotor 17 based on the determination. Therefore, it becomes possible to stop the servomotor 17 and to urgently stop the mold clamping operation of the mold due to the existence of a foreign matter between molds during a low-pressure mold clamping process performed prior to executing the high-pressure mold clamping process. Thereby, it becomes possible to prevent foreign matter from being crushed by high pressure and breaking during the high-pressure mold clamping process performed at the latter half of the mold clamping process, and furthermore, it becomes possible to prevent the mold from being damaged by the foreign matter being crushed by high pressure and braking during the high-pressure mold clamping process.

Preferred embodiments of the present invention have been described, but the present invention is not restricted to the above-disclosed embodiments, and various modifications are possible within the scope of the appended claims. In the preferred embodiment, when the abnormality determination means 25 determines that foreign matter exists between the molds, the operation of the servomotor 17 is urgently stopped, and the mold clamping operation is urgently stopped thereby. The present invention can be designed to seek attention of the user by outputting an alarm sound or displaying a warning information using characters or diagrams on the display device 5 immediately after urgently stopping the operation of the servomotor 17. The monitored torque value as a normal value stored in advance to the storage means 24 is set in advance as a value within the range of plus or minus 20 % of x, and stored in the storage means 24. For example, if x is 100, the range of the value is from 80 to 120, but the range is not limited to plus or minus 20 % of x, and the range can be determined arbitrarily, such as plus or minus 10 % or plus or minus 5 %.

## Claims

1. An injection molding machine (1) comprising:
a servomotor for opening and closing a mold; wherein
the servomotor (17) is driven to sequentially perform, as mold clamping processes, a high-speed mold clamping process, a low-pressure mold clamping process, and a high-pressure mold clamping process; wherein
the machine comprises an abnormality determination means (25) that determines that foreign matter exists between molds (15, 16), and further comprises a servomotor stopping means (26) for stopping the servomotor when the abnormality determination means determines that foreign matter exists, wherein the injection molding machine further comprises a torque value detection means (23) for detecting an actual measured torque value of the servomotor; **characterized in that** the abnormality determination means determines that foreign matter exists between molds when the actual measured torque value of the servomotor that occurs to a mold opening side during the low-pressure mold clamping process is negative and changes so as to become less negative such that it falls out of range of a given normal value set in advance.

## Patentansprüche

1. Spritzgussmaschine (1), umfassend:
einen Servomotor zum Öffnen und Schließen eines Formwerkzeugs; worin
der Servomotor (17) angesteuert wird, als Formklemmverfahren ein Hochgeschwindigkeitsformklemmverfahren, ein Niederdruck-Formklemmverfahren und ein Hochdruck-Formklemmverfahren nacheinander auszuführen; worin
die Maschine ein Abnormalitätsbestimmungsmittel (25) umfasst, das bestimmt, dass zwischen Formwerkzeugen (15, 16) Fremdkörper vorhanden sind, und ferner ein Servomotoranhaltemittel (26) zum Anhalten des Servomotors umfasst, wenn das Abnormalitätsbestimmungsmittel bestimmt, dass Fremdkörper vorhanden sind, worin
die Spritzgussmaschine ferner ein Drehmomentwertdetektionsmittel (23) zum Detektieren eines Ist-Drehmomentmesswert des Servomotors umfasst;
**dadurch gekennzeichnet, dass**
das Abnormalitätsbestimmungsmittel bestimmt, dass Fremdkörper zwischen Formwerkzeugen vorhanden sind, wenn der Ist-Drehmomentmesswert des Servomotors, der an einer Formwerkzeugöffnungsseite während des Niederdruck-Formklemmverfahrens auftritt, negativ ist und sich derart ändert, um weniger negativ zu werden, dass er aus dem Bereich eines im Voraus eingestellten, vorgegebenen Normalwerts herausfällt.

## Revendications

1. Machine de moulage par injection (1) comprenant :
un servomoteur pour ouvrir et fermer un moule ; dans laquelle
le servomoteur (17) est entraîné pour effectuer de façon séquentielle, comme processus de serrage de moule, un processus de serrage de moule à grande vitesse, un processus de serrage de moule à basse pression, et un processus de serrage de moule à haute pression ; dans laquelle
la machine comprend des moyens de détermination d'anomalie (25) qui déterminent qu'un corps étranger existe entre des moules (15, 16), et
comprend en outre des moyens d'arrêt de servomoteur (26) pour arrêter le servomoteur lorsque les moyens de détermination d'anomalie déterminent qu'il existe un corps étranger, dans laquelle
la machine de moulage par injection comprend en outre des moyens de détection de valeur de couple (23) pour détecter une valeur de couple mesurée réelle du servomoteur ; **caractérisée en ce que**
les moyens de détermination d'anomalie déterminent qu'un corps étranger existe entre des moules lorsque la valeur de couple mesurée réelle du servomoteur qui se produit d'un côté d'ouverture de moule pendant le processus de serrage du moule à basse pression est négative et change pour devenir moins négative de sorte qu'elle tombe hors d'une plage d'une valeur normale donnée définie à l'avance.
